# EUROPÄISCHE PATENTSCHRIFT

(11) **EP 1 572 765 B1**
(45) Veröffentlichungstag und Bekanntmachung des Hinweises auf die Patenterteilung: **30.05.2007**
(21) Anmeldenummer: 03816984.3
(22) Anmeldetag: 18.10.2003
(51) Int. Cl.: C08F 220/42, C08J 9/00

(54) **DERIVATISIERUNG HOCHMOLEKULARER POLYMETHACRYLIMIDE**
DERIVATISATION OF POLYMETHACRYLIMIDES WITH A HIGH MOLECULAR WEIGHT
DERIVATISATION DE POLYMETHACRYLIMIDES A HAUT POIDS MOLECULAIRE

(30) Priorität: 18.12.2002 DE 10259674
(43) Veröffentlichungstag der Anmeldung: 14.09.2005
(73) Patentinhaber: Röhm GmbH, 64293 Darmstadt (DE)
(72) Erfinder: STEIN, Peter, 64367 Traisa (DE); SCHERBLE, Jonas, 64367 Mühltal (DE); GEYER, Werner, 64367 Mühltal (DE); BARTHEL, Thomas, 64646 Heppenheim (DE); SEIBERT, Hermann, 67663 Kaiserslautern (DE); MAIER, Leonard, 63110 Rodgau (DE); ROOSEN, Dirk, 64521 Gross-Gerau (DE)
(86) Internationale Anmeldenummer: PCT/EP2003/011542
(87) Internationale Veröffentlichungsnummer: WO 2004/111100

(56) Entgegenhaltungen:
- EP-A- 0 874 019
- DE-A- 10 052 239

## Beschreibung

### Anwendungsgebiet der Erfindung

Verfahren zur Herstellung von derivatisierten und auch teilderivatisierten Polymethacrylimiden, insbesondere hochmolekularen, die sich dadurch auszeichnen, dass der Derivatisierungsgrad einstellbar ist.

### Stand der Technik

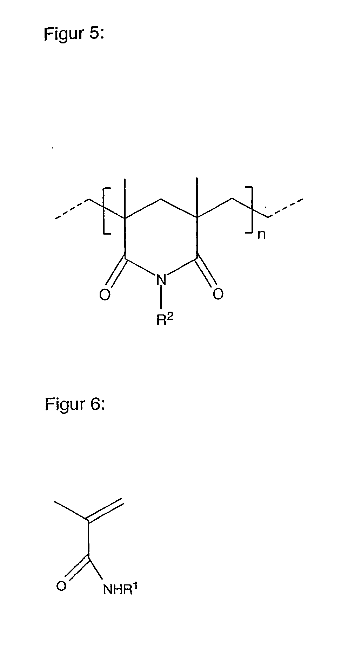

Polymethacrylimide sind seit langer Zeit bekannt. Die Hauptkette besitzt durch die Ringstruktur der Monomereinheit an den beiden Methylgruppen eine hohe Kettensteifigkeit (siehe Figur 5), weshalb die Polymethacrylimide hohe Glasübergangstemperaturen besitzen, die bis über 200°C reichen. Im Folgenden soll das Wort "Polymethacrylimid" mit "PMI" abgekürzt werden.

PMI-Strukturen sind über mehrere synthetische Routen zugänglich. Möglich ist beispielsweise eine Aminolyse von PMMA mit dem einem primären Amin in einem geeigneten, hochsiedenden Lösungsmittel (z.B. N-Methylpyrrolidon) Die erhaltenen Polymere müssen durch Umfällen gereinigt werden, so dass sich diese Methode nur im Labormaßstab bewährt hat, wo die Flexibilität dieser Methode von Vorteil ist.

Weiterhin bekannt und auch in großtechnischer Anwendung ist die lösungsmittelfreie, polymeranaloge Umsetzung von Polymethylmethacrylat, im Folgenden als PMMA abgekürzt, mit einem primären Amin. Vorteilhaft bei dieser Syntheseroute, die technisch in einem Extruder bewerkstelligt wird, ist die Möglichkeit der Variation der Struktur durch den Einsatz verschiedenartiger Amine. Prinzipiell sind auch Mischungen denkbar, um etwaige Eigenschaften einzustellen. Technisch durchgesetzt hat sich zum Zeitpunkt dieser Veröffentlichung das methylsubstituierte Poly-N-methylmethacrylimid (PMMI).

Durch die Menge des eingesetzten Amins lässt sich die PMMA Kette auch nur teilweise polymeranalog umsetzen, weshalb mehrere kommerzielle Produkte existieren. Diese unterscheiden sich auf Grund des unterschiedlichen Anteils an PMI-Strukturen beispielsweise in der Wärmeformbeständigkeit und der Verarbeitung. Mit diesen Produkten kann eine Wärmeformbeständigkeit von ~170°C erreicht werden. Nachteilig ist diese Syntheseroute im Hinblick auf den Polymerisationsgrad. Alle eingesetztem PMMA Formassen müssen schmelzbar sein, um im Extruder aufgeschmolzen und umgesetzt werden zu können, weshalb sie Molekulargewichte bis rund 200.000 g/mol besitzen. Die Hauptanwendungsbereiche dieser Produkte liegen im Spritzgussbereich und werden unter dem Namen PLEXIMID^{®} vertrieben (siehe hierzu auch *Die Makromolekulare Chemie,* **96**, 227(1966)).

Hochmolekulare, nicht schmelzbare PMI-Werkstoffe, die Molekulargewichte von beispielsweise 1.000.000 g/mol und oder auch höher besitzen, waren bisher nur durch eine Umsetzung von Methacrylsäure und Methacrylnitril in Substanz möglich. Hierbei wird in einem ersten Schritt ein Copolymer erzeugt, welches in einem zweiten Schritt durch Erhitzen in eine PMI-Struktur überführt wird. Die dabei auftretende, intramolekulare Zyklisierung erzwingt eine Wasserstoffsubstitution am Stickstoffatom, weshalb diese Route nur dieses eine Derivat liefern kann.

Verfahrenstechnisch wird die Polymerisation in einer Kammer durchgeführt, die beispielsweise aus zwei planparallelen Glasplatten besteht, die mit einer Dichtschnur auf Abstand gehalten werden. In diese Kammer wird das Reaktionsgemisch, in der Regel bestehend aus Methacrylsäure, Methacrylnitril, Initiator und gegebenenfalls weiterer Additive, eingefüllt und durch Erwärmen polymerisiert. Eine Erwärmung kann beispielsweise durch Wasser oder Luft erfolgen. Nach der Polymerisation wird die Kammer geöffnet und die auf diese Weise hergestellte Copolymerisattafel entnommen.

Durch einen weiteren Temperschritt bei erhöhter Temperatur wird das Copolymerisat in das Polymethacrylimid überführt. Durch Zusatz von Treibmitteln in das Reaktionsgemisch lässt sich das Copolymerisat während der Zyklisierung aufschäumen.

Diese hochmolekularen PMI-Schäume werden kommerziell unter dem Handelsnamen ROHACELL^{®} vertrieben und besitzen eine hervorragende Wärmeformbeständigkeit, die bis zu 240°C reicht. Anwendung finden diese Hartschäume in Sandwichstrukturen, die durch ihr geringes Gewicht im Transportwesen immer mehr an Bedeutung gewinnen. Nachteilig ist bei dieser Syntheseroute, dass eine Veränderung der Monomereinheit nicht möglich ist und damit wesentliche Freiheitsgrade bei der Beeinflussung der Eigenschaften verloren gehen.

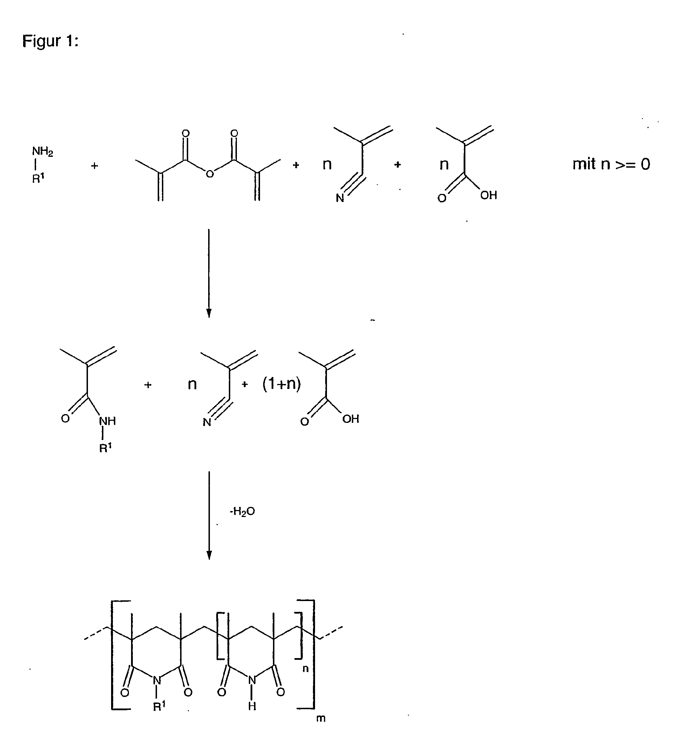

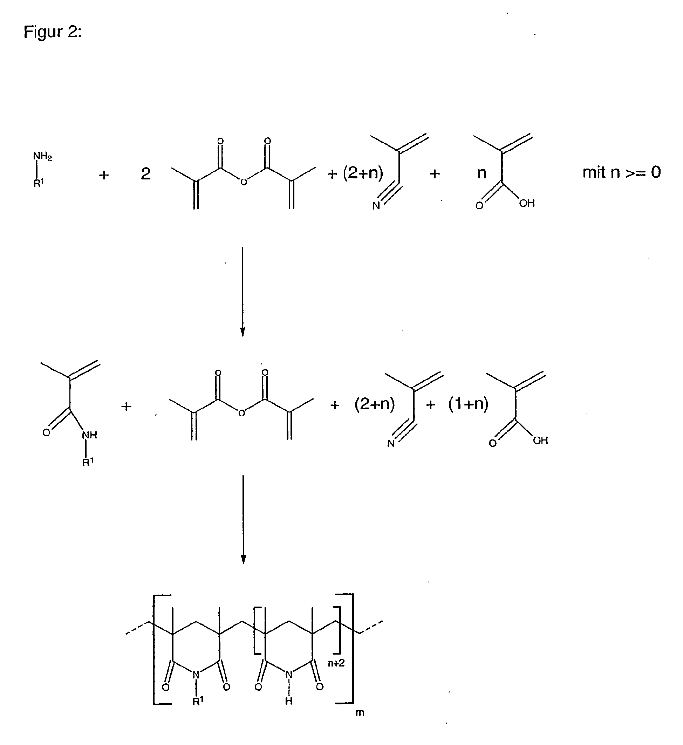

Der hier beschriebenen Erfindung lag daher die Aufgabe zugrunde, eine Möglichkeit zu finden, hochmolekulare, substituierte Polymethacrylimide herzustellen. Gelöst werden kann diese Aufgabe durch Umsetzung eines primären Amins mit Methacrylsäureanhydrid, was zu Methacrylsäure und dem korrespondierenden Methacrylamid führt. Das hierbei entstehende Amid liegt dann in Lösung neben Methacrylsäure vor. Als geeignete Lösungsmittel bieten sich beispielsweise Gemische aus Methacrylsäure und Methacrylnitril an. Da diese beiden Monomere die Ausgangsverbindungen für ein unsubstituiertes Polymethacrylimid sind, kann gegebenenfalls eine Aufreinigung des Methacrylamid - Methacrylsäure - Gemisches entfallen. (Siehe Figur 1 und 2, wobei n≥0 ist.)

Muss das für die Substitution zu verwendende Methacrylamid nicht in situ hergestellt werden, sondern steht zur Synthese zur Verfügung, so kann es mit Methacrylsäure oder Methacrylsäureanhydrid direkt umgesetzt werden.

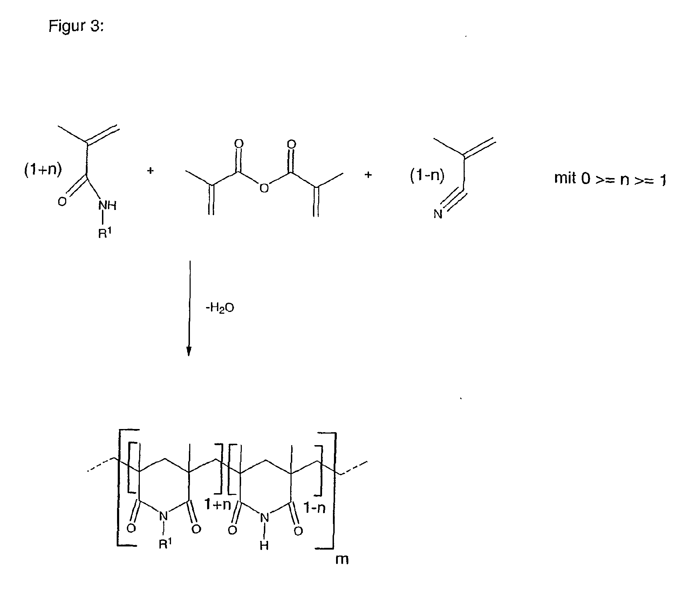

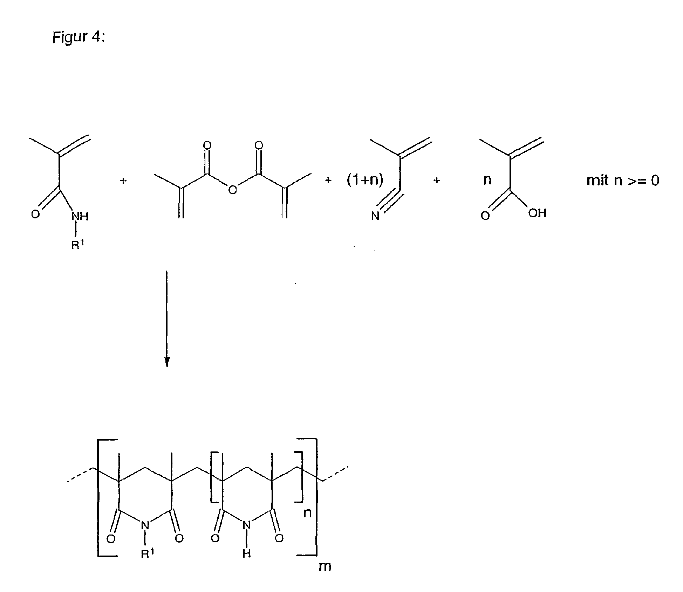

Durch Copolymerisation und anschließende Zyklisierung zum Polymethacrylimid ist eine Substitution auf diese Weise ebenfalls möglich. (Siehe Figur 3, wobei 0≤n≤1 ist, und Figur 4, wobei n≥0 ist.)

Es lassen sich die folgenden Fälle unterscheiden:

### Fall 1:

Vollsubstitution: 100% Substitutionsgrad: Als Substitutionsgrad ist hierbei der prozentuale Anteil der Anzahl der Polymethacrylimidmonomereinheiten gemeint, die am Stickstoffatom nicht mit einem Wasserstoffatom substituiert sind. Alle anderen Polymethacrylimidmonomereinheiten sind dann wasserstoffsubstitutiert. Dies gilt auch für alle weiteren angegebenen Substitutionsgrade. Um eine 100% Substitution am Stickstoffatom zu erreichen, muss das dem eingesetzten Amin korrespondierende Methacrylamid mit der gebildeten Methacrylsäure umgesetzt werden. Nachteilig ist in diesem Fall, dass die oben beschriebene Umsetzung eines primären Amins mit Methacrylsäureanhydrid nur möglich ist, wenn das Amin im Anhydrid löslich ist und das Produktgemisch flüssig. Andernfalls muss mit Lösungsmittel gearbeitet werden, welches vor der Polymerisation wieder entfernt werden muss. Zudem wird während der Zyklisierungsreaktion ein Wassermolekül abgespalten, so dass eine große Menge Wasser im System enthalten ist, die das Polymethacrylimid aufschäumt. Daher ist eine vollständige Substitution auf diesem Wege zwar möglich, aber mit Nachteilen verbunden. Siehe hierzu auch Figur 1 für n=0, wobei R¹ einen Alkyl- oder Arylrest mit bis zu 36 C-Atomen darstellt, der zusätzlich Sauerstoff-, Stickstoff-, Schwefel-, und Phosphoratome in Form von typischen, organischen Funktionalitäten, wie beispielsweise eine Ether-, Alkohol- Säure-, Ester-, Amid-, Imid-, Phosphonsäure-, Phosphonsäureester, Phoshinsäure-, Phosphinsäureester-, Sulfonsäure-, Sulfonsäureester-, Sulfinsäure-, Sulfinsäureesterfunktion, Silicium-, Aluminium- und Boratome oder auch Halogene wie Fluor, Chlor, Brom oder Jod enthalten kann. Namentlich erwähnt, jedoch ohne hierauf beschränkt zu sein, sollen hier sein Methylamin, Ethylamin, n-Propylamin, 2-Propylamin, n-Butylamin, 2-Butylamin, 3-Methyl-2-Butylamin, tert.Butylamin, die Isomeren des Propyl-, Hexyl-, Heptylamins, die Isomeren des Octylamins, wie beispielsweise 2-Ethylhexylamin, Laurylamin, Stearylamin, Anilin, Benzylamin, Toluidin, Alkylaniline, Alkylbenzylamine, Etheramine, Amine der Formel H₂NR³-O-R³, Esteramine, Amine der Formel H₂NR³-PO(OR³)₂ oder H₂NR³-CO₂-OR³, wobei R³ einen Alkyl- oder Arylrest mit bis zu 20 C-Atomen darstellt.

### Fall 2:

Teilsubstitution: >0% bis <100% Substitutionsgrad: Es wird verfahren wie unter Fall 1 beschrieben. Allerdings wird die Umsetzung des primären Amins mit Methacrylsäureanhydrid in einer Lösung aus Methacrylsäure und Methacrylnitril durchgeführt, wobei die Menge des Lösungsmittelgemisches kleiner oder gleich der Menge an Monomeren sein muss, die man für den gewünschten Substitutionsgrad benötigt, damit ein Aufarbeitungsschritt entfallen kann. Das erhaltene Gemisch wird wie oben beschrieben in einer Kammer polymerisiert. Je nach gewünschtem Substitutionsgrad sinkt die Menge des während der anschließend durchgeführten Zyklisierung abgespaltenen Wassers. Siehe hierzu auch Figur 1 für n>0, wobei R¹ wie vorher beschrieben zu verstehen ist. Zur Vereinfachung der Darstellung wurde in Figur 1 als Lösungsmittelgemisch eine stöchiometrische Zusammensetzung an Methacrylsäure und Methacrylnitril wiedergegeben, ohne jedoch hierauf beschränkt zu sein. D.h. eine Verschiebung der Monomerverhältnisse ist möglich (Vergleiche DE 2822885, DE 3346060, DE 3826469, DE 19717483)

### Fall 3:

Teilsubstitution: >0% bis 33,3% Substitutionsgrad: Um die Wasserabspaltung in Fall 1 und 2 zu vermeiden, und die damit verbundenen Probleme zu umgehen, besteht die Möglichkeit, das bei der Zyklisierung von Amid und Methacrylsäure zum Imid entstehende Wasseräquivalent mit einem weiteren Äquivalent Methacrylsäureanhydrid abzufangen. Insgesamt entstehen daher zwei Äquivalente Methacrylsäure, die mit zwei Äquivalenten Methacrylnitril abgefangen werden können. Der maximal erreichbare Substitutionsgrad liegt dann bei 33,3%, was bedeutet, dass ein Drittel aller Monomereinheiten keine Wasserstoff- sondern eine davon verschiedene Substitution am Stickstoffatom aufweisen. Vorteilhaft ist in diesem Fall, dass zum einen keine Wasserabspaltung während der Zyklisierung auftritt und man zum anderen die Umsetzung des primären Amins mit einem Überschuss Methacrylsäureanhydrid in zwei Äquivalenten Methacrylnitril durchführen kann, ohne dass eine Aufarbeitung erfolgen muss. Dies hilft im Falle schwer löslicher Amine und reduziert die Wärmetönung der exothermen Reaktion. Analog zu Fall 2 kann man auch für Fall 3 die Umsetzung des primären Amins mit Methacrylsäureanhydrid in einer zusätzlichen Lösung aus Methacrylsäure und Methacrylnitril durchführen, wobei die Menge des Lösungsmittelgemisches kleiner oder gleich der Menge an Monomeren sein muss, die man für den gewünschten Substitutionsgrad benötigt, damit ein Aufarbeitungsschritt entfallen kann. Zu berücksichtigen ist hierbei, dass zwei Äquivalente Methacrylnitril durch die beiden erzeugte Äquivalente Methacrylsäure verbraucht werden. Siehe hierzu auch Figur 2 für n≥0, wobei R¹ wie vorher beschrieben zu verstehen ist. Die Vorgehensweise wird in Figur 2 am Beispiel des Stearylamins demonstriert, ohne jedoch darauf beschränkt zu sein. Zur Vereinfachung der Darstellung wurde in Figur 2 ferner als Lösungsmittelgemisch eine stöchiometrische Zusammensetzung an Methacrylsäure und Methacrylnitril wiedergegeben, ohne jedoch hierauf beschränkt zu sein. D.h. eine Verschiebung der Monomerverhältnisse ist möglich.

### Fall 4:

Vollsubstitution: 100% Substitutionsgrad: Die oben beschriebenen Fälle 1-3 beziehen sich auf die Vorgehensweise, wenn das zu verwendende Methacrylamid in situ hergestellt werden muss. Steht dieses Methacrylamid aber zur Synthese in Reinform zur Verfügung, so kann die Vorgehensweise geändert werden. Durch Umsetzung des N-Methacrylamidderivats mit einem Äquivalent Methacrylsäureanhydrid entsteht formal in situ ein halbes Äquivalent des korrespondierenden Methacrylimids. Durch Copolymerisation und anschließendes Zyklisieren zum Polymethacrylimid unter Abspaltung eines halben Äquivalentes Wasser kann das Endpolymer erhalten werden (Siehe Figur 3 für n=1).

### Fall 5:

50% bis <100 Substitutionsgrad: Es wird verfahren, wie für Fall 4 beschrieben. Zusätzlich wird dem Monomergemisch Methacrylnitril zugegeben, welches mit einem Teil der gebildeten Methacrylsäure reagiert (Siehe Figur 3 für 0<n≤1). Dies hilft insbesondere, wenn Löslichkeitsprobleme den Fall 4 für eine bestimmte Substitution nicht möglich machen. Auf diese Weise ist eine Teilsubstitution immer noch realisierbar. Es ist zwar auch denkbar ein Methacrylsäure - Methacrylnitril - Gemisch für eine Reduktion des Substitutionsgrades zu verwenden, jedoch ist es sinnvoller, entsprechend mehr Methacrylsäureanhydrid zu verwenden, um die Menge des während der Zyklisierung abgespaltenen Wassers zu minimieren. Die Verwendung eines Methacrylsäure- Methacrylnitril- Gemischs ist aber unter Umständen geeignet, um Löslichkeitsprobleme zu umgehen.

### Fall 6:

Teilsubstitution: >0% bis 50% Substitutionsgrad: Der hierbei dargestellte Substitutionsgrad von 50% stellt den in Fall 5 bzw. Figur 3 beschriebenen Grenzfall für n=0 dar. In diesem Grenzfall wird das während der Zyklisierung abgespaltene Wasser vollständig abgefangen. Übertragen auf Figur 4, entspricht dies ebenfalls dem Fall n=0. Wird einem solchen Gemisch aus substituiertem Methacrylamid, Methacrylsäureanhydrid und Methacrylnitril ein Methacrylsäure - Methacrylnitril - Gemisch hinzugefügt, so lässt sich der Substitutionsgrad weiter vermindern und gleichzeitig das während der Zyklisierung gebildete Wasser vollständig abgefangen.

Es besteht darüber hinaus die Möglichkeit, die oben beschriebenen Fälle zu kombinieren, wodurch die Anzahl der Möglichkeiten und des damit verbundenen Optimierungspotentials für ein bestimmtes Material noch höher wird. Denkbar ist hierbei beispielweise die Kombination eines Amids und Amins mit Methacrylsäureanhydrid, Methacrylsäure und Methacrylnitril. Eine Kombination lässt sich formal wieder in die oben genannten Fälle zerlegen, weshalb hier auf eine nähere Beschreibung verzichtet werden kann.

Die erfindungsgemäßen Schäume erhält man, wenn man eine Mischung bestehend aus
(A) 0 - 2,6 mol-Teilen eines oder mehrerer primärer Amine H₂NR¹, wobei R¹ wie vorher beschrieben zu verstehen ist,
   0 - 5,2 mol-Teilen eines oder mehrerer N-Methacrylamide C₄H₆NOR¹ gemäß Figur 6, wobei R¹ wie vorher beschrieben zu verstehen ist,
   >0 - 6,5 mol-Teilen Methacrylsäureanhydrid,
   0 - 3,9 mol-Teilen Methacrylnitril und
   0 - 1,3 mol-Teilen Methacrylsäure;
(B) 0,3 - 2,0 mol-Teilen Methacrylnitril,
   0,7 - 2,5 mol-Teilen Methacrylsäure und
   0 - 0,2 mol-Teilen weitere vinylisch ungesättigte Monomere, wobei das Verhältnis der Summen der mol-Teile aus (B) und (A) bei (B)/(A)=0 bis 1 Million liegt;
(C) 0,5 - 15 Gewichtsprozent, bezogen auf die Summe der Gewichte der Komponenten (A) und (B), eines Treibmittels;
(D) 0,01 bis 0,5 Gewichtsprozent, bezogen auf die Summe der Gewichte der Komponenten (A) und (B), eines oder mehrerer Polymerisationsinitiatoren;
(E) 0 - 200 Gewichtsprozent, bezogen auf die Summe der Gewichte der Komponenten (A) und (B), üblichen Zusatzstoffen
zu einer Platte polymerisiert und anschließend diese Polymerisatplatte bei Temperaturen von 150 bis 250 °C schäumt.

Als weitere, vinylisch ungesättigte Monomeren können beispielsweise Styrol oder Styrolderivate, wie Methylstyrol oder Chlorstyrol eingesetzt werden. Beispielhaft für Polymerisationsinitiatoren seien genannt: Azoverbindungen wie 2,2'-Azobis-(isobutyronitril) oder 2,2'-Azobis(2,4-dimethylvaleronitril), RedoxSysteme, wie beispielsweise die Kombination von tertiären Aminen mit Peroxiden oder bevorzugt Peroxide (vgl. hierzu beispielsweise H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978). Beispiele geeigneter Peroxid-Polymerisationsinitiatoren sind Dilauroylperoxid, tert.-Butylperoctoat, tert.-Butylperisononanoat, Dicyclohexylperoxidicarbonat, Dibenzoylperoxid oder 2,2-Bis-(tert.-butylperoxy)-butan. Man kann auch bevorzugt die Polymerisation mit einem Gemisch verschiedener Polymerisationsinitiatoren unterschiedlicher Halbwertzeit durchführen, beispielsweise Dilauroylperoxid und 2,2-Bis-(tert.-butylperoxy)-butan, um den Radikalstrom im Verlauf der Polymerisation sowie bei verschiedenen Polymerisationstemperaturen konstant zu halten. Die eingesetzten Mengen an Polymerisationsinitiator liegen im allgemeinen bei 0,01 bis 2 Gew.-% bezogen auf das Monomerengemisch. Als Treibmittel zur Schäumung kann neben Wasser auch beispielsweise Formamid oder auch ein aliphatischer Alkohol mit 3 bis 8 Kohlenstoffatomen, wie beispielsweise 2-Propanol oder tert. -Butanol, eingesetzt werden.

Von technischen Nutzen ist beispielsweise die Verminderung der Wasseraufnahme, wenn unpolare Seitenketten mit der erfindungsgemäßen Methode an das Polymer angebunden werden. Dies lässt sich beispielsweise mit Stearylamin oder Laurylamin realisieren, ohne jedoch hierauf beschränkt zu sein.

Weiterhin lässt sich beispielsweise durch den Einbau von Seitenketten mit verschiedenen Polaritäten und/oder durch Variation des Substitutionsgrades die Polarität des Materials einstellen. Dies kann beispielsweise dazu benutzt werden, um die Haftung zu einem bestimmten Harz zu verbessern. Letzteres spielt in der Sandwichtechnologie eine große Rolle.

Unpolare, aliphatische Ketten wirken zudem als intrinsische Weichmacher, d.h. der Weichmacher ist kovalent gebunden und kann nicht migrieren. Auf diese Weise lässt sich beispielsweise die Reißdehnung beeinflussen. Auch polare weichmachende Ketten sind möglich.

Möglich ist auch die kovalente Anbindung von flammgeschützten Seitenketten, wie beispielsweise Phosphonsäuren und deren Ester, ohne dabei hierauf beschränkt zu sein. Vorteilhaft ist dabei, das zum einen keine Migrationsverluste des Flammschutzmittels auftreten können und das es auf molekularer Ebene verteilt ist, was dessen Wirksamkeit erhöht.

Denkbar ist auch die Beeinflussung der dielektrischen Eigenschaften durch den Einbau von Aromaten mit bestimmter Substitutionsstruktur, beispielsweise Benzoesäureester. Die Polarisierbarkeiten und Dipolmomente der Aromaten wirken sich dabei auf die makroskopischen Eigenschaften aus.

Vorteilhaft ist auch der Einbau von flüssigkristallinen Seitenketten oder flüssigkristallinen Precursorn, d.h. Seitenketten, die im ungebundenen Zustand selbst zwar nicht flüssigkristallin sind, angebunden an das Polymer aber eine flüssigkristalline Phase ausbilden. Derartige Phänome sind dem Fachmann allgemein bekannt und in der Literatur beschrieben. Auch in diesem Fall werden beispielsweise die dielektrischen Eigenschaften entscheidend von der flüssigkristallinen Phase beeinflusst. Zudem kann man mit Hilfe der flüssigkristallinen Phase beispielsweise die Wärmeausdehnung des Polymers und auch dessen mechanisches Verhalten, beispielsweise die Schlagzähigkeit, beeinflussen.

Der Einbaum von makromolekularen Seitenketten erlaubt beispielsweise den Einbau von Weichphasen.

### Beispiel 1

Zu einem Gemisch aus 3360 g Methacrylsäureanhydrid, 1460 g Methacrylnitril, 690g 2-Propanol, 294 g Formamid wurden 5180 g Methacryl-amidomethanphosphonsäure-butylester langsam unter Rühren zugesetzt.

Desweiteren wurden nach einstündigem Rühren der Mischung 3 g tert.-Butylperpivalat, 2 g tert.-Butylper-2-ethyl-hexanoat, 7 g tert.-Butylperbenzoat, 7 g Cumylperneodecanoat, 0,5 g Hydrochinonmonomethylether und 17,0 g PAT 1037 (Vertrieb: E. und P. Würtz GmbH & Co. KG, Industriegebiet, In der Weide 13+18, 55411 Bingen, Sponsheim.) als Trennmittel hinzugefügt.

Das Gemisch wurde bis zur Homogenisierung gerührt und anschließend 19 h bei 38°C in einer aus zwei Glasplatten der Größe 50x50cm und einer 1,85 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Die darauffolgende Schäumung erfolgte 2h bei 170°C. Der so erhaltene Schaumstoff wies ein Raumgewicht von 27 kg/m³ auf. Der Substitutionsgrad des Schaums betrug etwa 50%.

Der so hergestellte Schaum war durch den kovalent gebundenen, und somit molekular verteilten Phosphonsäureester flammgeschützt ausgerüstet und dem gemäß selbstverlöschend.

### Beispiel 2

Zu einem Gemisch aus 3734 g Methacrylsäure, 3741 g Methacrylnitril und 1911 g Methacrylsäureanhydrid wurden 1149 g Stearylamin unter Rühren langsam zugetropft. Nach Abkühlen der Lösung auf Raumtemperatur wurden dem Gemisch des weiteren 295 g tert.-Butanol, 126 g Formamid, 4 g tert.-Butylperpivalat, 3,5 g tert.-Butylper-2-ethyl-hexanoat, 10 g tert.-Butylperbenzoat, 10,3 g Cumylperneodecanoat, 0,5 g Hydrochinonmonomethylether und 16 g PAT 1037 als Trennmittel hinzugefügt.

Das Gemisch wurde bis zur Homogenisierung gerührt und anschließend 20 h bei 38,5°C in einer aus zwei Glasplatten der Größe 50x50cm und einer 1,85 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Die darauffolgende Schäumung erfolgte 2h bei 230°C. Der so erhaltene Schaumstoff wies ein Raumgewicht von 80 kg/m³ auf. Der Substitutionsgrad des Schaums betrug 10%.

### Beispiel 3

Zu einem Gemisch aus 2653 g Methacrylsäure, 3196 g Methacrylnitril und 2592 g Methacrylsäureanhydrid wurden 1558 g Stearylamin unter Rühren langsam zugetropft. Nach Abkühlen der Lösung auf Raumtemperatur wurden dem Gemisch des weiteren 295 g tert.-Butanol, 126 g Formamid, 3,8 g tert.-Butylperpivalat, 3,4 g tert.-Butylper-2-ethyl-hexanoat, 9,4 g tert.-Butylperbenzoat, 9,7 g Cumylperneodecanoat, 0,5 g Hydrochinonmonomethylether und 16 g PAT 1037 als Trennmittel hinzugefügt.

Das Gemisch wurde bis zur Homogenisierung gerührt und anschließend 19 h bei 39°C in einer aus zwei Glasplatten der Größe 50x50cm und einer 1,85 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Die darauffolgende Schäumung erfolgte 2h bei 190°C. Der so erhaltene Schaumstoff wies ein Raumgewicht von 134 kg/m³ auf. Der Substitutionsgrad des Schaums betrug 15%.

### Beispiel 4

Zu einem Gemisch aus 4844 g Methacrylsäure, 4070 g Methacrylnitril und 679 g Methacrylsäureanhydrid wurden 408 g Stearylamin unter Rühren langsam zugetropft. Nach Abkühlen der Lösung auf Raumtemperatur wurden dem Gemisch des weiteren 295 g tert.-Butanol, 126 g Formamid, 3,8 g tert.-Butylperpivalat, 3,4 g tert.-Butylper-2-ethyl-hexanoat, 9,5 g tert.-Butylperbenzoat, 9,8 g Cumylperneodecanoat, 0,5 g Hydrochinonmonomethylether und 16 g PAT 1037 als Trennmittel hinzugefügt.

Das Gemisch wurde bis zur Homogenisierung gerührt und anschließend 19 h bei 38,7°C in einer aus zwei Glasplatten der Größe 50x50cm und einer 1,85 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Die darauffolgende Schäumung erfolgte 2h bei 210°C. Der so erhaltene Schaumstoff wies ein Raumgewicht von 99 kg/m³ auf. Der Substitutionsgrad des Schaums betrug 3,5%.

Die Wasseraufnahme des Schaums betrug nach 28 bei 70°C und 95% relativer Luftfeuchte 8%, was eine Verbesserung um 10% gegenüber der entsprechenden unsubstituierten Probe bedeutet. Eine zu Beispiel 4 hergestellte Vergleichsprobe mit einem Substitutionsgrad von 0% nimmt unter diesen Bedingungen 9% Wasser auf. Hieraus wird deutlich, das die Beeinflussung der Materialeigenschaften schon bei kleinen Substitutionsgraden erheblich ist.

### Beispiel 5

Zu einem Gemisch aus 3802 g Methacrylsäure, 3587 g Methacrylnitril und 1434 g Methacrylsäureanhydrid wurden 862 g Laurylamin unter Rühren langsam zugetropft. Nach Abkühlen der Lösung auf Raumtemperatur wurden dem Gemisch des weiteren 295 g tert.-Butanol, 126 g Formamid, 4 g tert.-Butylperpivalat, 3,5 g tert.-Butylper-2-ethyl-hexanoat, 10 g tert.-Butylperbenzoat, 10,3 g Cumylperneodecanoat, 0,5 g Hydrochinonmonomethylether und 16 g PAT 1037 als Trennmittel hinzugefügt.

Das Gemisch wurde bis zur Homogenisierung gerührt und anschließend 21 h bei 39,5°C in einer aus zwei Glasplatten der Größe 50x50cm und einer 1,85 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Die darauffolgende Schäumung erfolgte 2h bei 210°C. Der so erhaltene Schaumstoff wies ein Raumgewicht von 70 kg/m³ auf. Der Substitutionsgrad des Schaums betrug 8%.

### Vergleichsbeispiel 1

Ein nicht substituierter Schaumstoff mit einem Raumgewicht von 71 kg/m³ wurde gemäß DE 33 46 060 hergestellt. Hierzu wurden einer Mischung aus gleichen mol-Teilen an 5620g Methacrylsäure und 4380g Methacrylnitril 140g Formamid und 135g Wasser als Treibmittel zugesetzt. Des weiteren wurden der Mischung 10,0g tert.-Butylperbenzoat, 4,0g tert.-Butylperpivalat, 3,0g tert.-Butylper-2-ethylhexanoat und 10,0g Cumylperneodecanoat als Initiatoren beigefügt. Darüber hinaus wurden dem Gemisch 1000g Dimethylmethanphosphonat (DMMP) als Flammschutzmittel zugefügt. Schließlich enthielt die Mischung 20g Trennmittel (MoldWiz), 70g ZnO und 0,5g Hydochinonmonomethylether.

Diese Mischung wurde 92h bei 40°C in einer aus zwei Glasplatten der Größe 50x50cm und einer 2,2cm dicken Randabdichtung gebildeten Kammer polymerisiert. Anschließend wurde das Polymerisat zur Endpolymerisation 17,25h einem von 40°C bis 115°C reichenden Temperprogramm unterworfen. Die darauffolgende Schäumung erfolgte 2h bei 215°C. Der so erhaltene Schaumstoff wies ein Raumgewicht von 71 kg/m³ auf.

## Patentansprüche

1. Verwendung einer Zusammensetzung zur Herstellung von Poly(meth)acrylimiden und Poly(meth)acrylimid-Schaumstoffen,
**dadurch gekennzeichnet,**
**daß** der Zusammensetzung ein oder mehrere voneinander verschiedene N-Methacrylamide C₄H₆NOR¹ und/oder ein oder mehrere voneinander verschiedene primäre Amine H₂NR² und/oder Methacrylsäureanhydrid zugegeben werden, wobei R¹ oder R² gleich oder verschieden sein können und einen Alkyl- oder Arylrest mit bis zu 36 C-Atomen darstellen, der zusätzlich Sauerstoff-, Stickstoff-, Schwefel-, und Phosphoratome in Form von organischen Funktionalitäten, wie eine Ether-, Alkohol- Säure-, Ester-, Amid- , Imid-, Phosphonsäure-, Phosphonsäureester, Phoshinsäure-, Phosphinsäureester-, Sulfonsäure-, Sulfonsäureester-, Sulfinsäure-, Sulfinsäureesterfunktion, Silicium-, Aluminium- und Boratome oder Halogene wie Fluor, Chlor, Brom oder Jod enthalten kann, die Bedeutung von R¹ und R² kann ferner sein die Methylgruppe, die Ethylgruppe, die n-Propylgruppe, 2-Propylgruppe, n-Butylgruppe, 2-Butylgruppe, 3-Methyl-2-Butylgruppe, tert.Butylgruppe, die Isomeren der Propyl-, Hexyl-, Heptylgruppe, die Isomeren der Octylgruppe, die 2-Ethylhexylgruppe, die Laurylgruppe, Stearylgruppe, die Phenylgruppe, Benzylgruppe, Alkylphenylgruppe, Alkylbenzylgruppe, R³-PO(OR³)₂-Gruppe, wobei R³ einen Alkyl- oder Arylrest mit bis zu 20 C-Atomen darstellt.

2. Zusammensetzung zur Herstellung von Poly(meth)acrylimiden und Poly(meth)acrylimid-Schaumstoffen,
**dadurch gekennzeichnet,**
**daß** der Zusammensetzung ein oder mehrere voneinander verschiedene N-Methacrylamide C₄H₆NOR¹ und/oder ein oder mehrere voneinander verschiedene primäre Amine H₂NR² und/oder Methacrylsäureanhydrid zugegeben werden, wobei R¹ oder R² gleich oder verschieden sein können und einen Alkyl- oder Arylrest mit bis zu 36 C-Atomen darstellen, der zusätzlich Sauerstoff-, Stickstoff-, Schwefel-, und Phosphoratome in Form von organischen Funktionalitäten, wie eine Ether-, Alkohol- Säure-, Ester-, Amid- , Imid-, Phosphonsäure-, Phosphonsäureester, Phoshinsäure-, Phosphinsäureester-, Sulfonsäure-, Sulfonsäureester-, Sulfinsäure-, Sulfinsäureesterfunktion, Silicium-, Aluminium- und Boratome oder Halogene wie Fluor, Chlor, Brom oder Jod enthalten kann, die Bedeutung von R¹ und R² kann ferner sein die Methylgruppe, die Ethylgruppe, die n-Propylgruppe, 2-Propylgruppe, n-Butylgruppe, 2-Butylgruppe, 3-Methyl-2-Butylgruppe, tert.Butylgruppe, die Isomeren der Propyl-, Hexyl-, Heptylgruppe, die Isomeren der Octylgruppe, die 2-Ethylhexylgruppe, die Laurylgruppe, Stearylgruppe, die Phenylgruppe, Benzylgruppe, Alkylphenylgruppe, Alkylbenzylgruppe, R³-PO(OR³)₂-Gruppe, wobei R³ einen Alkyl- oder Arylrest mit bis zu 20 C-Atomen darstellt und dass die Zusammensetzung ein Treibmittel enthält.

3. Zusammensetzung gemäß Anspruch 2,
**dadurch gekennzeichnet,**
**dass** es sich bei dem Treibmittel um einen aliphatischen Alkohol mit 3 bis 8 Kohlenstoffatomen, Harnstoff, Monomethyl- und/oder N,N'-Dimethylharnstoff und/oder Formamid und/oder Wasser handelt.

4. Verfahren zur Herstellung eines Polymethacrylimid-Schaumstoffes,
**dadurch gekennzeichnet,**
**dass** man eine Mischung bestehend aus
(A) 0,7 - 1,3 mol-Teilen eines oder mehrerer primärer Amine H₂NR², wobei R² wie vorher beschrieben zu verstehen ist,
0,7 - 1,3 mol-Teilen Methacrylsäureanhydrid;
(B) 0,3 - 2,0 mol-Teilen Methacrylnitril,
0,7 - 2,5 mol-Teilen Methacrylsäure und
0 - 0,2 mol-Teilen weitere vinylisch ungesättigte Monomere, wobei der molare Anteil der Monomere aus (A) bei mindestens 0,0001 mol% der Gesamtmonomermenge aus (A) und (B) liegt;
(C) 0,5 - 15 Gewichtsprozent, bezogen auf die Summe der Gewichte der Komponenten (A) und (B), Treibmittel;
(D) 0,01 bis 0,5 Gewichtsprozent, bezogen auf die Summe der Gewichte der Komponenten (A) und (B), Polymerisationsinitiatoren;
(E) 0 - 200 Gewichtsprozent, bezogen auf die Summe der Gewichte der Komponenten (A) und (B), übliche Zusatzstoffe
zu einer Platte polymerisiert und anschließend diese Polymerisatplatte bei Temperaturen von 150 bis 250 °C schäumt.

5. Verfahren zur Herstellung eines Polymethacrylimid-Schaumstoffes,
**dadurch gekennzeichnet,**
**dass** man eine Mischung bestehend aus
(A) 0,7 - 1,3 mol-Teilen eines oder mehrerer primärer Amine H₂NR², wobei R² wie vorher beschrieben zu verstehen ist,
1,4 - 2,6 mol-Teilen Methacrylsäureanhydrid,
1,4 - 2,6 mol-Teilen Methacrylnitril;
(B) 0,3 - 2,0 mol-Teilen Methacrylnitril,
0,7 - 2,5 mol-Teilen Methacrylsäure und
0 - 0,2 mol-Teilen weitere vinylisch ungesättigte Monomere, wobei der molare Anteil der Monomere aus (A) bei mindestens 0,0001 mol% der Gesamtmonomermenge aus (A) und (B) liegt;
(C) 0,5 - 15 Gewichtsprozent, bezogen auf die Summe der Gewichte der Komponenten (A) und (B), eine Treibmittel;
(D) 0,01 bis 0,5 Gewichtsprozent, bezogen auf die Summe der Gewichte der Komponenten (A) und (B), eines oder mehrerer Polymerisationsinitiatoren;
(E) 0 - 200 Gewichtsprozent, bezogen auf die Summe der Gewichte der Komponenten (A) und (B), üblichen Zusatzstoffen
zu einer Platte polymerisiert und anschließend diese Polymerisatplatte bei Temperaturen von 150 bis 250°C schäumt.

6. Verfahren zur Herstellung eines Polymethacrylimid-Schaumstoffes,
**dadurch gekennzeichnet,**
**dass** man eine Mischung bestehend aus
(A) 10⁻⁷ - 1,3 mol-Teilen eines oder mehrerer N-Methacrylamide H₂C=CCH₃CONR¹, wobei R¹ wie vorher beschrieben zu verstehen ist,
0,7 - 1,3 mol-Teilen Methacrylsäureanhydrid,
10⁻⁷ - 1,3 mol-Teilen Methacrylnitril, wobei die Summe der mol-Teile aus Methacrylnitril und dem N-Methacrylamid zwischen 0,7 und 1,3 mol-Teilen liegt;
(B) 0 - 0,2 mol-Teilen weiteren vinylisch ungesättigten Monomeren,
(C) 0,5 - 15 Gewichtsprozent, bezogen auf die Summe der Gewichte der Komponenten (A) und (B), Treibmittel;
(D) 0,01 bis 0,5 Gewichtsprozent, bezogen auf die Summe der Gewichte der Komponenten (A) und (B), eines oder mehrerer Polymerisationsinitiatoren;
(E) 0 - 200 Gewichtsprozent, bezogen auf die Summe der Gewichte der Komponenten (A) und (B), üblichen Zusatzstoffen
zu einer Platte polymerisiert und anschließend diese Polymerisatplatte bei Temperaturen von 150 bis 250 °C schäumt.

7. Verfahren zur Herstellung eines Polymethacrylimid-Schaumstoffes,
**dadurch gekennzeichnet,**
**dass** man eine Mischung bestehend aus
(A) 0,7 - 1,3 mol-Teilen eines oder mehrerer N-Methacrylamide H₂C=CCH₃CONR¹, wobei R¹ wie vorher beschrieben zu verstehen ist,
0,7 - 1,3 mol-Teilen Methacrylsäureanhydrid,
0,7 - 1,3 mol-Teilen Methacrylnitril;
(B) 0,3 - 2,0 mol-Teilen Methacrylnitril,
0,7 - 2,5 mol-Teilen Methacrylsäure und
0 - 0,2 mol-Teilen weiteren vinylisch ungesättigten Monomeren;
(C) 0,5 - 15 Gewichtsprozent, bezogen auf die Summe der Gewichte der Komponenten (A) und (B), eines Treibmittels;
(D) 0,01 bis 0,5 Gewichtsprozent, bezogen auf die Summe der Gewichte der Komponenten (A) und (B), eines oder mehrerer Polymerisationsinitiatoren;
(E) 0 - 200 Gewichtsprozent, bezogen auf die Summe der Gewichte der Komponenten (A) und (B), üblichen Zusatzstoffen
zu einer Platte polymerisiert und anschließend diese Polymerisatplatte bei Temperaturen von 150 bis 250 °C schäumt.

8. Verfahren zur Herstellung eines Polymethacrylimid-Schaumstoffes,
**dadurch gekennzeichnet,**
**dass** man eine Mischung bestehend aus
(A) 0 - 2,6 mol-Teilen eines oder mehrerer primärer Amine H₂NR², wobei R² wie vorher beschrieben zu verstehen ist,
0 - 5,2 mol-Teilen eines oder mehrerer N-Methacrylamide H₂C=CCH₃CONR¹, wobei R¹ wie vorher beschrieben zu verstehen ist,
0 - 6,5 mol-Teilen Methacrylsäureanhydrid,
0 - 3,9 mol-Teilen Methacrylnitril und
0 - 1,3 mol-Teilen Methacrylsäure;
(B) 0,3 - 2,0 mol-Teilen Methacrylnitril,
0,7 - 2,5 mol-Teilen Methacrylsäure und
0 - 0,2 mol-Teilen weitere vinylisch ungesättigte Monomere, wobei der molare Anteil der Monomere aus (A) bei mindestens 0,0001 mol% der Gesamtmonomermenge aus (A) und (B) liegt;
(C) 0,5 - 15 Gewichtsprozent, bezogen auf die Summe der Gewichte der Komponenten (A) und (B), Treibmittel;
(D) 0,01 bis 0,5 Gewichtsprozent, bezogen auf die Summe der Gewichte der Komponenten (A) und (B), eines oder mehrerer Polymerisationsinitiatoren;
(E) 0 - 200 Gewichtsprozent, bezogen auf die Summe der Gewichte der Komponenten (A) und (B), üblichen Zusatzstoffen
zu einer Platte polymerisiert und anschließend diese Polymerisatplatte bei Temperaturen von 150 bis 250°C schäumt.

9. Verfahren gemäß einem der Ansprüche 3-8,
**dadurch gekennzeichnet,**
**dass** als Treibmittel ein aliphatischer Alkohol mit 3 bis 8 Kohlenstoffatomen, Harnstoff, Monomethyl- und/oder N,N'-Dimethylharnstoff und/oder Formamid und/oder Wasser eingesetzt wird.

10. Schichtwerkstoff, enthaltend eine Schicht eines Poly(meth)acrylimid-Schaumstoffes gemäß Anspruch 1-9.

11. Automobil,
**dadurch gekennzeichnet,**
**dass** es ganz oder teilweise aus einem Poly(meth)acrylimid-Schaumstoff gemäß mindestens einem der vorstehenden Ansprüche besteht.

12. Schienenfahrzeug,
**dadurch gekennzeichnet,**
**dass** es ganz oder teilweise aus einem Poly(meth)acrylimid-Schaumstoff gemäß mindestens einem der vorstehenden Ansprüche besteht.

13. Wasserfahrzeug,
**dadurch gekennzeichnet,**
**dass** es ganz oder teilweise aus einem Poly(meth)acrylimid-Schaumstoff gemäß mindestens einem der vorstehenden Ansprüche besteht.

14. Rotor,
**dadurch gekennzeichnet,**
**dass** er ganz oder teilweise aus einem Poly(meth)acrylimid-Schaumstoff gemäß mindestens einem der vorstehenden Ansprüche besteht.

## Claims

1. Use of a composition for preparing poly(meth)acrylimides and for producing poly(meth)acrylimide foams,
**characterized in that**
one or more different, N-methacrylamides C₄H₆NOR¹ and/or one or more different, primary amines H₂NR² and/or methacrylic anhydride are added to the composition, where R¹ or R² may be identical or different and are an alkyl or aryl radical which has up to 36 carbon atoms and in which oxygen atoms, nitrogen atoms, sulphur atoms, and phosphorus atoms in the form of organic functionalities, such as an ether function, alcohol function, acid function, ester function, amide function, imide function, phosphonic acid function, phosphonic ester, phosphinic acid function, phosphinic ester function, sulphonic acid function, sulphonic ester function, sulphinic acid function, sulphinic ester function, silicon atoms, aluminium atoms and boron atoms, or halogens, such as fluorine, chlorine, bromine or iodine may also be present, R¹ and R² may moreover be the methyl group, the ethyl group, the n-propyl group, 2-propyl group, n-butyl group, 2-butyl group, 3-methyl-2-butyl group, tert-butyl group, the isomers of the propyl, hexyl, heptyl group, the isomers of the octyl group, the 2-ethylhexyl group, the lauryl group, stearyl group, the phenyl group, benzyl group, alkylphenyl group, alkylbenzyl group, R³-PO (OR³)₂ group, where R³ is an alkyl or aryl radical having up to 20 carbon atoms.

2. Composition for preparing poly(meth)acrylimides and for producing poly(meth)acrylimide foams,
**characterized in that**
one or more different, N-methacrylamides C₄H₆NOR¹ and/or one or more different, primary amines H₂NR² and/or methacrylic anhydride are added to the composition, where R¹ or R² may be identical or different and are an alkyl or aryl radical which has up to 36 carbon atoms and in which oxygen atoms, nitrogen atoms, sulphur atoms, and phosphorus atoms in the form of organic functionalities, such as an ether function, alcohol function, acid function, ester function, amide function, imide function, phosphonic acid function, phosphonic ester, phosphinic acid function, phosphinic ester function, sulphonic acid function, sulphonic ester function, sulphinic acid function, sulphinic ester function, silicon atoms, aluminium atoms and boron atoms, or halogens, such as fluorine, chlorine, bromine or iodine may also be present, R¹ and R² may moreover be the methyl group, the ethyl group, the n-propyl group, 2-propyl group, n-butyl group, 2-butyl group, 3-methyl-2-butyl group, tert-butyl group, the isomers of the propyl, hexyl, heptyl group, the isomers of the octyl group, the 2-ethylhexyl group, the lauryl group, stearyl group, the phenyl group, benzyl group, alkylphenyl group, alkylbenzyl group, R³-PO(OR³)₂ group, where R³ is an alkyl or aryl radical having up to 20 carbon atoms and **in that** the composition comprises a blowing agent.

3. Composition according to Claim 2, **characterized in that** the blowing agent is an aliphatic alcohol having from 3 to 8 carbon atoms, urea, monomethyl- and/or N,N'-dimethylurea and/or formamide and/or water.

4. Process for producing a polymethacrylimide foam, **characterized in that** a mixture composed of
(A) from 0.7 to 1.3 molar parts of one or more primary amines H₂NR², where R² is as described above,
from 0.7 to 1.3 molar parts of methacrylic anhydride;
(B) from 0.3 to 2.0 molar parts of methacrylonitrile,
from 0.7 to 2.5 molar parts of methacrylic acid and
from 0 to 0.2 molar part of other monomers having vinyl unsaturation, where the molar proportion of the monomers composed of (A) is at least 0.0001 mol% of the entire amount of monomers composed of (A) and (B);
(C) from 0.5 to 15 per cent by weight, based on the total of the weights of components (A) and (B), of blowing agent;
(D) from 0.01 to 0.5 per cent by weight, based on the total of the weights of components (A) and (B), of polymerization initiators;
(E) from 0 to 200 per cent by weight, based on the total of the weights of components (A) and (B), of conventional additives
is polymerized to give a sheet, and then this polymer sheet is foamed at temperatures of from 150 to 250°C.

5. Process for producing a polymethacrylimide foam, **characterized in that** a mixture composed of
(A) from 0.7 to 1.3 molar parts of one or more primary amines H₂NR², where R² is as described above,
from 1.4 to 2.6 molar parts of methacrylic anhydride,
from 1.4 to 2.6 molar parts of methacrylonitrile;
(B) from 0.3 to 2.0 molar parts of methacrylonitrile,
from 0.7 to 2.5 molar parts of methacrylic acid and
from 0 to 0.2 molar part of other monomers having vinyl unsaturation, where the molar proportion of the monomers composed of (A) is at least 0.0001 mol% of the entire amount of monomers composed of (A) and (B);
(C) from 0.5 to 15 per cent by weight, based on the total of the weights of components (A) and (B), of a blowing agent;
(D) from 0.01 to 0.5 per cent by weight, based on the total of the weights of components (A) and (B), of one or more polymerization initiators;
(E) from 0 to 200 per cent by weight, based on the total of the weights of components (A) and (B), of conventional additives
is polymerized to give a sheet, and then this polymer sheet is foamed at temperatures of from 150 to 250°C.

6. Process for producing a polymethacrylimide foam, **characterized in that** a mixture composed of
(A) from 10⁻⁷ to 1.3 molar parts of one or more N-methacrylamides H₂C=CCH₃CONR¹, where R¹ is as described above,
from 0.7 to 1.3 molar parts of methacrylic anhydride,
from 10⁻⁷ to 1.3 molar parts of methacrylonitrile, where the total of the molar parts of methacrylonitrile and of the N-methacrylamide is from 0.7 to 1.3 molar parts;
(B) from 0 to 0.2 molar part of other monomers having vinyl unsaturation,
(C) from 0.5 to 15 per cent by weight, based on the total of the weights of components (A) and (B), of blowing agent;
(D) from 0.01 to 0.5 per cent by weight, based on the total of the weights of components (A) and (B), of one or more polymerization initiators;
(E) from 0 to 200 per cent by weight, based on the total of the weights of components (A) and (B), of conventional additives
is polymerized to give a sheet, and then this polymer sheet is foamed at temperatures of from 150 to 250°C.

7. Process for producing a polymethacrylimide foam, **characterized in that** a mixture composed of
(A) from 0.7 to 1.3 molar parts of one or more N-methacrylamides H₂C=CCH₃CONR¹, where R¹ is as described above,
from 0.7 to 1.3 molar parts of methacrylic anhydride,
from 0.7 to 1.3 molar parts of methacrylonitrile;
(B) from 0.3 to 2.0 molar parts of methacrylonitrile,
from 0.7 to 2.5 molar parts of methacrylic acid and
from 0 to 0.2 molar part of other monomers having vinyl unsaturation;
(C) from 0.5 to 15 per cent by weight, based on the total of the weights of components (A) and (B), of a blowing agent;
(D) from 0.01 to 0.5 per cent by weight, based on the total of the weights of components (A) and (B), of one or more polymerization initiators;
(E) from 0 to 200 per cent by weight, based on the total of the weights of components (A) and (B), of conventional additives
is polymerized to give a sheet, and then this polymer sheet is foamed at temperatures of from 150 to 250°C.

8. Process for producing a polymethacrylimide foam, **characterized in that** a mixture composed of
(A) from 0 to 2.6 molar parts of one or more primary amines H₂NR², where R² is as described above,
from 0 to 5.2 molar parts of one or more N-methacrylamides H₂C=CCH₃CONR¹, where R¹ is as described above,
from 0 to 6.5 molar parts of methacrylic anhydride,
from 0 to 3.9 molar parts of methacrylonitrile and
from 0 to 1.3 molar parts of methacrylic acid;
(B) from 0.3 to 2.0 molar parts of methacrylonitrile,
from 0.7 to 2.5 molar parts of methacrylic acid and
from 0 to 0.2 molar part of other monomers having vinyl unsaturation, where the molar proportion of the monomers composed of (A) is at least 0.0001 mol% of the entire amount of monomers composed of (A) and (B);
(C) from 0.5 to 15 per cent by weight, based on the total of the weights of components (A) and (B), of blowing agent;
(D) from 0.01 to 0.5 per cent by weight, based on the total of the weights of components (A) and (B), of one or more polymerization initiators;
(E) from 0 to 200 per cent by weight, based on the total of the weights of components (A) and (B), of conventional additives
is polymerized to give a sheet, and then this polymer sheet is foamed at temperatures of from 150 to 250°C.

9. Process according to any of Claims 3 to 8, **characterized in that** the blowing agent used comprises an aliphatic alcohol having from 3 to 8 carbon atoms, urea, monomethyl- and/or N,N'-dimethylurea and/or formamide and/or water.

10. Laminate comprising a layer of a poly(meth)acrylimide foam according to any of Claims 1 to 9.

11. Automobile **characterized in that** it is composed entirely or partially of a poly(meth)acrylimide foam according to at least one of the preceding claims.

12. Rail vehicle **characterized in that** it is composed entirely or partially of a poly(meth)acrylimide foam according to at least one of the preceding claims.

13. Watercraft **characterized in that** it is composed entirely or partially of a poly(meth)acrylimide foam according to at least one of the preceding claims.

14. Rotor **characterized in that** it is composed entirely or partially of a poly(meth)acrylimide foam according to at least one of the preceding claims.

## Revendications

1. Utilisation d'une composition pour la préparation de poly(méth)acrylimides et de mousses à base de poly(méth)acrylimide, **caractérisée en ce que** la composition est additionnée d'un ou de plusieurs N-méthacrylamides C₄H₆NOR¹ différents les uns des autres et/ou d'une ou de plusieurs amines primaires H₂NR² différentes les unes des autres et/ou d'anhydride de l'acide méthacrylique, R¹ ou R² pouvant être identiques ou différents et représentant un radical alkyle ou aryle comprenant jusqu'à 36 atomes de carbone, qui peut en outre contenir des atomes d'oxygène, d'azote, de soufre et de phosphore sous forme de fonctionnalités organiques, telles qu'une fonction éther, alcool, acide, ester, amide, imide, acide phosphonique, ester d'acide phosphonique, acide phosphinique, ester d'acide phosphinique, acide sulfonique, ester d'acide sulfonique, acide sulfinique, ester d'acide sulfinique, des atomes de silicium, d'aluminium et de bore ou des halogènes, tels que le fluor, le chlore, le brome ou l'iode, R¹ et R² pouvant en outre signifier le groupe méthyle, éthyle, n-propyle, 2-propyle, n-butyle, 2-butyle, 3-méthyl-2-butyle, tert-butyle, les isomères du groupe propyle, hexyle, heptyle, les isomères du groupe octyle, le groupe 2-éthylhexyle, lauryle, stéaryle, phényle, benzyle, alkylphényle, alkylbenzyle, R³-PO(OR³)₂, R³ représentant un groupe alkyle ou aryle comprenant jusqu'à 20 atomes de carbone.

2. Composition pour la préparation de poly(méth)acrylimides et de mousses à base de poly(méth)acrylimide, **caractérisée en ce que** la composition est additionnée d'un ou de plusieurs N-méthacrylamides C₄H₆NOR¹ différents les uns des autres et/ou d'une ou de plusieurs amines primaires H₂NR² différentes les unes des autres et/ou d'anhydride de l'acide méthacrylique, R¹ ou R² pouvant être identiques ou différents et représentant un radical alkyle ou aryle comprenant jusqu'à 36 atomes de carbone, qui peut en outre contenir des atomes d'oxygène, d'azote, de soufre et de phosphore sous forme de fonctionnalités organiques, telles qu'une fonction éther, alcool, acide, ester, amide, imide, acide phosphonique, ester d'acide phosphonique, acide phosphinique, ester d'acide phosphinique, acide sulfonique, ester d'acide sulfonique, acide sulfinique, ester d'acide sulfinique, des atomes de silicium, d'aluminium et de bore ou des halogènes, tels que le fluor, le chlore, le brome ou l'iode, R¹ et R² pouvant en outre signifier le groupe méthyle, éthyle, n-propyle, 2-propyle, n-butyle, 2-butyle, 3-méthyl-2-butyle, tert-butyle, les isomères du groupe propyle, hexyle, heptyle, les isomères du groupe octyle, le groupe 2-éthylhexyle, lauryle, stéaryle, phényle, benzyle, alkylphényle, alkylbenzyle, R³-PO(OR³)₂, R³ représentant un groupe alkyle ou aryle comprenant jusqu'à 20 atomes de carbone et la composition contient un agent gonflant.

3. Composition selon la revendication 2, **caractérisée en ce qu'**il s'agit, pour l'agent gonflant, d'un alcool aliphatique comprenant 3 à 8 atomes de carbone, d'urée, de monométhylurée et/ou de N,N'-diméthylurée et/ou de formamide et/ou d'eau.

4. Procédé pour la préparation d'une mousse de polyméthacrylimide, **caractérisé en ce qu'**on polymérise un mélange constitué par
(A) 0,7-1,3 partie en mole d'une ou de plusieurs amines primaires H₂NR², R² étant défini comme décrit ci-dessus, 0,7-1,3 partie en mole d'anhydride de l'acide méthacrylique ;
(B) 0,3-2,0 parties en mole de méthacrylonitrile,
0,7-2,5 parties en mole d'acide méthacrylique et
0-0,2 partie en mole d'autres monomères vinyliquement insaturés, la proportion molaire des monomères de (A) représentant au moins 0,0001% en mole de la quantité totale de monomères de (A) et (B) ;
(C) 0,5-15% en poids, par rapport à la somme des poids des composants (A) et (B), d'agent gonflant ;
(D) 0,01 à 0,5% en poids, par rapport à la somme des poids des composants (A) et (B), d'initiateurs de polymérisation ;
(E) 0-200% en poids, par rapport à la somme des poids des composants (A) et (B), d'additifs usuels ;
en une plaque, puis on mousse cette plaque de polymère à des températures de 150 à 250°C.

5. Procédé pour la préparation d'une mousse de polyméthacrylimide, **caractérisé en ce qu'**on polymérise un mélange constitué par
(A) 0,7-1,3 partie en mole d'une ou de plusieurs amines primaires H²NR², R² étant défini comme décrit ci-dessus, 1,4-2,6 parties en mole d'anhydride de l'acide méthacrylique,
1,4-2,6 parties en mole de méthacrylonitrile ;
(B) 0,3-2,0 parties en mole de méthacrylonitrile,
0,7-2,5 parties en mole d'acide méthacrylique et
0-0,2 partie en mole d'autres monomères vinyliquement insaturés, la proportion molaire des monomères de (A) représentant au moins 0,0001% en mole de la quantité totale de monomères de (A) et (B) ;
(C) 0,5-15% en poids, par rapport à la somme des poids des composants (A) et (B), d'un agent gonflant ;
(D) 0,01 à 0,5% en poids, par rapport à la somme des poids des composants (A) et (B), d'un ou de plusieurs initiateurs de polymérisation ;
(E) 0-200% en poids, par rapport à la somme des poids des composants (A) et (B), d'additifs usuels ;
en une plaque, puis on mousse cette plaque de polymère à des températures de 150 à 250°C.

6. Procédé pour la préparation d'une mousse de polyméthacrylimide, **caractérisé en ce qu'**on polymérise un mélange constitué par
(A) 10⁻⁷-1,3 partie en mole d'un ou de plusieurs N-méthacrylamides H₂C=CCH₃CONR¹, R¹ étant défini comme décrit ci-dessus,
0,7-1,3 partie en mole d'anhydride de l'acide méthacrylique,
10⁻⁷-1,3 partie en mole de méthacrylonitrile, la somme des parties en mole de méthacrylonitrile et de N-méthacrylamide étant comprise entre 0,7 et 1,3 partie en mole ;
(B) 0-0,2 partie en mole d'autres monomères vinyliquement insaturés,
(C) 0, 5-15% en poids, par rapport à la somme des poids des composants (A) et (B), d'agent gonflant ;
(D) 0,01 à 0,5% en poids, par rapport à la somme des poids des composants (A) et (B), d'un ou de plusieurs initiateurs de polymérisation ;
(E) 0-200% en poids, par rapport à la somme des poids des composants (A) et (B), d'additifs usuels ;
en une plaque, puis on mousse cette plaque de polymère à des températures de 150 à 250°C.

7. Procédé pour la préparation d'une mousse de polyméthacrylimide, **caractérisé en ce qu'**on polymérise un mélange constitué par
(A) 0,7-1,3 partie en mole d'un ou de plusieurs N-méthacrylamides H₂C=CCH₃CONR¹, R¹ étant défini comme décrit ci-dessus,
0,7-1,3 partie en mole d'anhydride de l'acide méthacrylique,
0,7-1,3 partie en mole de méthacrylonitrile ;
(B) 0,3-2,0 parties en mole de méthacrylonitrile,
0,7-2,5 parties en mole d'acide méthacrylique et
0-0,2 partie en mole d'autres monomères vinyliquement insaturés ;
(C) 0,5-15% en poids, par rapport à la somme des poids des composants (A) et (B), d'un agent gonflant ;
(D) 0,01 à 0,5% en poids, par rapport à la somme des poids des composants (A) et (B), d'un ou de plusieurs initiateurs de polymérisation ;
(E) 0-200% en poids, par rapport à la somme des poids des composants (A) et (B), d'additifs usuels ;
en une plaque, puis on mousse cette plaque de polymère à des températures de 150 à 250°C.

8. Procédé pour la préparation d'une mousse de polyméthacrylimide, **caractérisé en ce qu'**on polymérise un mélange constitué par
(A) 0-2,6 parties en mole d'une ou de plusieurs amines primaires H₂NR², R² étant défini comme décrit ci-dessus,
0-5,2 parties en mole d'un ou de plusieurs N-méthacrylamides H₂C=CCH₃CONR¹, R¹ étant défini comme décrit ci-dessus,
0-6,5 parties en mole d'anhydride de l'acide méthacrylique,
0-3,9 parties en mole de méthacrylonitrile et
0-1,3 partie en mole d'acide méthacrylique ;
(B) 0,3-2,0 parties en mole de méthacrylonitrile,
0,7-2,5 parties en mole d'acide méthacrylique et
0-0,2 partie en mole d'autres monomères vinyliquement insaturés, la proportion molaire des monomères de (A) représentant au moins 0,0001% en mole de la quantité totale de monomères de (A) et (B) ;
(C) 0,5-15% en poids, par rapport à la somme des poids des composants (A) et (B), d'agent gonflant ;
(D) 0,01 à 0,5% en poids, par rapport à la somme des poids des composants (A) et (B), d'un ou de plusieurs initiateurs de polymérisation ;
(E) 0-200% en poids, par rapport à la somme des poids des composants (A) et (B), d'additifs usuels ;
en une plaque, puis on mousse cette plaque de polymère à des températures de 150 à 250°C.

9. Procédé selon l'une quelconque des revendications 3-8, **caractérisé en ce qu'**on utilise, comme agent gonflant, un alcool aliphatique comprenant 3 à 8 atomes de carbone, de l'urée, de la monométhylurée et/ou de la N,N'-diméthylurée et/ou du formamide et/ou de l'eau.

10. Matériau en couches, contenant une couche d'une mousse à base de poly(méth)acrylimide selon la revendication 1-9.

11. Voiture, **caractérisée en ce qu'**elle est totalement ou partiellement constituée par une mousse à base de poly(méth)acrylimide selon au moins l'une quelconque des revendications précédentes.

12. Véhicule sur rails, **caractérisé en ce qu'**il est totalement ou partiellement constitué par une mousse à base de poly(méth)acrylimide selon au moins l'une quelconque des revendications précédentes.

13. Bateau, **caractérisé en ce qu'**il est totalement ou partiellement constitué par une mousse à base de poly(méth)acrylimide selon au moins l'une quelconque des revendications précédentes.

14. Rotor, **caractérisé en ce qu'**il est totalement ou partiellement constitué par une mousse à base de poly(méth)acrylimide selon au moins l'une quelconque des revendications précédentes.
